# EUROPEAN PATENT APPLICATION

(11) **EP 4 296 323 A1**
(43) Date of publication of application: **27.12.2023**
(21) Application number: 22755834.3
(22) Date of filing: 24.01.2022
(51) Int. Cl.: C09D 125/08, C09D 133/06, C09D 133/26, C09D 7/61

(54) **ANTI-FOG COATING**

(30) Priority: 19.02.2021 JP 2021025146
(71) Applicant: Fujikura Kasei Co., Ltd., Tokyo 174-0046 (JP)
(72) Inventor: TAKAHASHI Yoshio, Kuki-shi, Saitama 340-0203 (JP); HIROSAWA Hidenobu, Kuki-shi, Saitama 340-0203 (JP)
(74) Representative: Potter Clarkson
(86) International application number: PCT/JP2022/002328
(87) International publication number: WO 2022/176510

(57) **Abstract**

The anti-fog coating according to one aspect of the present invention contains a resin component (A) having a structural unit based on a (meth)acrylamide-based monomer represented by CH₂=CH-CO-NR¹R² and a structural unit based on at least one hydrophobic monomer selected from the group consisting of (meth)acrylate-based monomers having a hydrocarbon group and styrene-based monomers, and an amorphous silica (B) having an average primary particle size of not more than 60 nm, wherein the proportion of structural units based on the (meth)acrylamide-based monomer relative to the total of all the structural units that constitute the resin component (A) is within a range from 30 to 75% by mass, and the proportion of the amorphous silica (B) relative to the total mass of the resin component (A) and the amorphous silica (B) is within a range from 74 to 87% by mass. R¹ and R² either each independently represent a hydrogen atom or an alkyl group, or R¹ and R² are bonded together to form a nitrogen-containing heterocyclic group together with the N.

## Description

### [Technical Field]

The present invention relates to an anti-fog coating.

Priority is claimed on Japanese Patent Application No. 2021-025146, filed February 19, 2021, the content of which is incorporated herein by reference.

### [Background Art]

Vehicle lights such as automobile head lamps are generally provided with lenses formed from a transparent material. In these car lights, high-humidity air can sometimes enter the lighting chamber, and the external air or rain or the like can cause cooling of the lens, with fogging occurring as a result of condensation of moisture on the internal surfaces. Particularly in those cases where a transparent resin such as a polycarbonate resin is used as the transparent material, the high hydrophobicity of the material surface makes the above type of fogging more likely to occur. In order to suppress the generation of this type of fogging, one known method involves applying an anti-fog coating to provide a coating film on those regions where fogging can occur.

Patent Document 1 proposes an anti-fog coating containing an anti-fog coating resin obtained by living radical polymerization of a polymerizable monomer mixture containing an acrylamide monomer having no hydroxyl group or alkoxy group, and an acrylamide monomer having either one or both of a hydroxyl group and an alkoxy group. It is disclosed that by using this anti-fog coating, a coating film can be formed that exhibits excellent anti-fog properties and excellent resistance to water run marks.

### [Citation List]

### [Patent Document]

[Patent Document 1]
Japanese Unexamined Patent Application, First Publication No. 2019-26669

### [Summary of Invention]

### [Technical Problem]

However, a coating film formed from the anti-fog coating of Patent Document 1 sometimes suffers from unsatisfactory properties for one of the anti-fog properties, the humidity resistance, or the resistance to water run marks.

The present invention has an object of providing an anti-fog coating that is capable of forming a coating film having excellent anti-fog properties, humidity resistance, resistance to water run marks, and external appearance.

### [Solution to Problem]

The present invention has the following aspects.
[1] An anti-fog coating containing a resin component (A) having a structural unit based on a (meth)acrylamide-based monomer represented by formula (a) shown below and a structural unit based on at least one hydrophobic monomer selected from the group consisting of (meth)acrylate-based monomers having a hydrocarbon group and styrene-based monomers, and an amorphous silica (B) having an average primary particle size of not more than 60 nm, wherein
   the proportion of structural units based on the (meth)acrylamide-based monomer relative to the total of all the structural units that constitute the resin component (A) is within a range from 30 to 75% by mass, and
   the proportion of the amorphous silica (B) relative to the total mass of the resin component (A) and the amorphous silica (B) is within a range from 74 to 87% by mass.

      CH₂=CH-CO-NR¹R² ... (a)
   In the formula, R¹ and R² either each independently represent a hydrogen atom or an alkyl group, or R¹ and R² are bonded together to form a nitrogen-containing heterocyclic group together with the N.
[2] The anti-fog coating according to [1] above, wherein the proportion of structural units based on the hydrophobic monomer relative to the total of all the structural units that constitute the resin component (A) is within a range from 25 to 70% by mass.
[3] The anti-fog coating according to [1] or [2] above, wherein the molecular weight dispersity of the resin component (A) is not more than 3.0.

### [Advantageous Effects of Invention]

The anti-fog coating of the present invention is capable of forming a coating film having excellent anti-fog properties, humidity resistance, resistance to water run marks, and external appearance.

### [Brief Description of Drawings]

FIG. 1 is an outline cross-sectional view illustrating one example of a coated substrate having a coating film of the anti-fog coating formed on the substrate surface.
FIG. 2 is an outline cross-sectional view illustrating another example of a coated substrate having a coating film of the anti-fog coating formed on the substrate surface.
FIG. 3 is an outline cross-sectional view illustrating yet another example of a coated substrate having a coating film of the anti-fog coating formed on the substrate surface.

### [Description of Embodiments]

In the present invention, "(meth)acrylic" means acrylic or methacrylic. Similarly, "(meth)acrylate" means acrylate or methacrylate, and "(meth)acrylamide" means acrylamide ort methacrylamide.

The weight average molecular weight (hereinafter also abbreviated as "Mw"), the number average molecular weight (hereinafter also abbreviated as "Mn"), and the molecular weight dispersity that represents the ratio of Mw relative to Mn (hereinafter also abbreviated as Mw/Mn) for the resin component (A) each represent a polystyrene-equivalent value measured by gel permeation chromatography (hereinafter also abbreviated as "GPC").

The average primary particle size of the amorphous silica is determined using the BET method. In other words, the primary particle size is calculated from the specific surface area measured by the BET method. In the following description, the average primary particle size is sometimes referred to as simply the "primary particle size".

The term "water run mark" means a residual streak-shaped mark that remains on the coating film when a water droplet runs down the surface of the coating film and the coating film then dries.

The term "resistance to water run marks" means a resistance to the formation of these residual water run marks.

### [Anti-Fog Coating]

The anti-fog coating according to one aspect of the present invention contains a resin component (A) and an amorphous silica (B).

If necessary, the anti-fog coating may also contain a liquid medium.

If necessary, the anti-fog coating may also contain one or more other components besides the resin component (A), the amorphous silica (B) and the liquid medium, provided the characteristics of the coating are not impaired.

### <Resin Component (A)>

The resin component (A) has a structural unit (hereinafter also referred to as the "monomer (a) unit") based on a (meth)acrylamide-based monomer represented by formula (a) shown below (hereinafter also referred to as the "monomer (a)") and a structural unit (hereinafter also referred to as the "monomer (b) unit") based on at least one hydrophobic monomer selected from the group consisting of (meth)acrylate-based monomers having a hydrocarbon group and styrene-based monomers (hereinafter also referred to as the "monomer (b)").

CH₂=CH-CO-NR¹R² ... (a)

In the formula, R¹ and R² either each independently represent a hydrogen atom or an alkyl group, or R¹ and R² are bonded together to form a nitrogen-containing heterocyclic group together with the N.

By including the monomer (a) unit, the resin component (A) becomes hydrophilic, enabling the formed coating film to exhibit anti-fog properties.

In the above formula (a), the alkyl group for R¹ and R² may be linear or branched. In terms of the anti-fog properties, the number of carbon atoms in the alkyl group is preferably within a range from 1 to 6, and more preferably from 1 to 4.

Examples of the nitrogen-containing heterocyclic group formed when R¹ and R² are bonded together to form a ring together with the N include a morpholino group and a pyrrolidino group.

Examples of the monomer (a) include acrylamide, dimethylacrylamide, isopropylacrylamide, diethylacrylamide, acryloylmorpholine, and N-dodecylacrylamide. One of these monomers may be used alone, or a combination of two or more monomers may be used.

By including the monomer (b) unit, the resin component (A) can be prevented from becoming excessively hydrophilic, and the moisture resistance improves.

Among the possible compounds for the monomer (b), examples of the hydrocarbon group in the (meth)acrylate monomer having a hydrocarbon group include alkyl groups, alicyclic hydrocarbon groups, and aromatic groups and the like. The alkyl group may be linear or branched. The number of carbon atoms in the alkyl group is preferably within a range from 1 to 18, and more preferably from 1 to 4. The alicyclic hydrocarbon group may be monocyclic or polycyclic. The number of carbon atoms in the alicyclic hydrocarbon group is, for example, within a range from 5 to 10. Examples of the aromatic groups include aryl groups such as a phenyl group, and aralkyl groups such as a benzyl group.

Examples of the (meth)acrylate monomer having a hydrocarbon group include methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, cyclohexyl (meth)acrylate, and isobornyl (meth)acrylate.

Examples of the styrene-based monomer include styrene, 2-, 3- or 4-methylstyrene, dimethylstyrene, 2-, 3- of 4-ethylstyrene, α-methylstyrene, and α-ethylstyrene.

One of these monomers may be used alone, or a combination of two or more monomers may be used.

The resin component (A) may also have one or more structural units based on other monomers besides the monomer (a) and the monomer (b), provided the characteristics of the resin component (A) are not impaired.

These other monomers may be any monomer capable of copolymerization with the monomer (a) and the monomer (b), and examples include monomers having a functional group (but excluding the monomer (a)) (hereinafter also referred to as the "monomer (c)"). Examples of the functional group in the monomer (c) include a hydroxyl group, alkoxy group, carboxy group, and amide group. Alkoxy groups of 1 to 4 carbon atoms are preferred as the alkoxy group, and specific examples include a methoxy group, ethoxy group, n-propoxy group, n-butoxy group, and iso-butoxy group. The monomer (c) may have a single type, or two or more types, of functional group.

Examples of the monomer (c) include hydroxyl group-containing monomers such as hydroxyethyl (meth)acrylate, hydroxypropyl (meth)acrylate, and N-methylol (meth)acrylamide; alkoxy group-containing monomers such as N-(methoxymethyl) (meth)acrylamide, N-(hydroxymethyl) (meth)acrylamide, N-(2-hydroxyethyl) (meth)acrylamide, N-(ethoxymethyl) (meth)acrylamide, N-(butoxymethyl) (meth)acrylamide, and N-(isobutoxymethyl) (meth)acrylamide; carboxy group-containing monomers such as (meth)acrylic acid, itaconic acid, crotonic acid, and carboxyethyl acrylate; and amide group-containing monomers such as (meth)acrylamide. One of these monomers may be used alone, of a combination of two or more monomers may be used.

Reactive ultraviolet absorbers and reactive surfactants may also be used as other monomers.

Examples of reactive ultraviolet absorbers include the product RUVA-93 manufactured by Otsuka Chemical Co., Ltd. Examples of the reactive surfactants include the LATEMUL products manufactured by Kao Corporation, the ADEKA REASOAP products manufactured by Adeka Corporation, the AQUALON products manufactured by DKS Co., Ltd., and styrene-based materials such as ammonium styrene sulfonate and sodium styrene sulfonate.

The proportion of the monomer (a) unit relative to the total of all the structural units (100% by mass) that constitute the resin component (A) is typically within a range from 30 to 75% by mass, preferably from 40 to 60% by mass, and more preferably from 45 to 60% by mass. Provided the proportion of the monomer (a) unit is at least as large as the above lower limit, the anti-fog properties of the coating film are excellent, and provided the proportion is not more than the above upper limit, the resistance to water run marks and the humidity resistance of the coating film are superior.

The proportion of the monomer (b) unit relative to the total of all the structural units (100% by mass) that constitute the resin component (A) is typically not more than 70% by mass, and is preferably within a range from 25 to 70% by mass, more preferably from 25 to 60% by mass, and even more preferably from 25 to 55% by mass. Provided the proportion of the monomer (b) unit is at least as large as the above lower limit, the resistance to water run marks and the humidity resistance of the coating film are superior, and provided the proportion is not more than the above upper limit, the anti-fog properties of the coating film are more superior.

The proportion of the combined total of the monomer (a) unit and the monomer (b) unit relative to the total of all the structural units (100% by mass) that constitute the resin component (A) is preferably at least 60% by mass, more preferably at least 80% by mass, even more preferably at least 90% by mass, and may be 100% by mass.

The Mw value of the resin component (A) is preferably within a range from 30,000 to 200,000, and more preferably from 50,000 to 150,000. Provided the Mw value is at least as large as the above lower limit, the resistance to water run marks tends to be more superior, and provided the Mw value is not more than the above upper limit, the coating workability, film formability and substrate adhesiveness of the coating film tend to be more superior.

The Mw/Mn value of the resin component (A) is preferably not more than 3.0, and more preferably 2.5 or lower. There are no particular limitations on the lower limit for the Mw/Mn value which, for example, may be 1.1. Provided the Mw/Mn value is not more than the above upper limit, the viscosity of the anti-fog coating can be kept satisfactorily low and more favorable coating workability can be achieved, even when the proportion of the amorphous silica (B) relative to the total mass of the resin component (A) and the amorphous silica (B) is a high proportion of 75% by mass or higher.

The resin component (A) can be produced by polymerizing the monomer mixture containing the monomer (a) and the monomer (b). The monomer mixture may also contain one or more other monomers.

The proportion of the monomer (a) relative to the total mass of the monomer mixture is typically within a range from 30 to 75% by mass, preferably from 40 to 60% by mass, and more preferably from 45 to 60% by mass. Provided the proportion of the monomer (a) is at least as large as the above lower limit, the anti-fog properties of the coating film are excellent, and provided the proportion is not more than the above upper limit, the resistance to water run marks and the humidity resistance of the coating film are superior.

The proportion of the monomer (b) relative to the total mass of the monomer mixture is typically not more than 70% by mass, and is preferably within a range from 25 to 70% by mass, more preferably from 25 to 60% by mass, and even more preferably from 25 to 55% by mass. Provided the proportion of the monomer (b) is at least as large as the above lower limit, the resistance to water run marks and the humidity resistance of the coating film are superior, and provided the proportion is not more than the above upper limit, the anti-fog properties of the coating film are more superior.

The proportion of the combined total of the monomer (a) and the monomer (b) relative to the total mass of the monomer mixture is preferably at least 60% by mass, more preferably at least 80% by mass, even more preferably at least 90% by mass, and may be 100% by mass.

Polymerization of the monomer mixture may be carried out by a conventional method.

In terms of more easily ensuring that the Mw/Mn value for the obtained resin component (A) is not more than 2.5, a living polymerization is preferred as the monomer mixture polymerization method.

Examples of living polymerization methods include living cationic polymerization, living anionic polymerization and living radical polymerization methods. Examples of living radical polymerization methods include reversible addition-fragmentation chain transfer polymerization (RAFT polymerization), atom transfer radical polymerization (ATRP polymerization), and nitroxide-mediated radical polymerization (NMP polymerization).

A more detailed description of the case where the monomer mixture is subjected to RAFT polymerization is described below.

In a RAFT polymerization, the monomer mixture is polymerized in the presence of a polymerization initiator using a chain transfer agent (hereinafter, the chain transfer agent used in a RAFT polymerization is also referred to as a "RAFT agent").

There are no particular limitations on the polymerization initiator used in the RAFT polymerization, and any substance capable of initiating a radical polymerization may be used. Typically, peroxide-based polymerization initiators and azo-based polymerization initiators and the like are used as this type of polymerization initiator, and specific examples include 2,2'-azobis(2-methylbutyronitrile), 2,2'-azobisisobutyronitrile, 2,2'-azobis(2,4-dimethylvaleronitrile), and dimethyl-2,2'-azobis(2-methylpropionate). One of these polymerization initiators may be used alone, or a combination of two or more polymerization initiators may be used.

There are no particular limitations on the RAFT agent, and conventional RAFT agents may be used. Examples include thiocarbonylthio compounds such as dithioesters, trithiocarbonates, dithiocarbamates and xanthates. Among these, dithioesters and trithiocarbonates are preferred. Specific examples include 4-cyano-4-[(dodecylsulfanylthiocarbonyl)sulfanyl]pentanoic acid, and 2-[(dodecylsulfanylthiocarbonyl)sulfanyl]propanoic acid. One of these RAFT agents may be used alone, or a combination of two or more such RAFT agents may be used.

There are no particular limitations on the polymerization method used in the RAFT polymerization, and conventional methods may be employed, including solution polymerization methods, emulsion polymerization methods, bulk polymerization methods, and suspension polymerization methods. There are no particular limitations on the solvent medium (polymerization solvent) used during polymerization, and conventional solvents or the like may be used. There are also no particular limitations on the polymerization conditions, and for example, the polymerization may be conducted at a temperature within a range from 40 to 100°C for a period of 2 to 24 hours. Subsequently, the reaction may be halted by cooling or the like to obtain the resin component (A).

In a RAFT polymerization, the molecular weight of the obtained resin is dependent not on the concentration of the polymerization initiator, but rather on the concentration of the RAFT agent.

### <Amorphous Silica (B)>

The primary particle size of the amorphous silica (B) is typically not more than 60 nm, preferably not more than 40 nm, and even more preferably 20 nm or less. There are no particular limitations on the lower limit for the primary particle size which, for example, may be 5 nm. Provided the primary particle size of the amorphous silica (B) is not more than the above upper limit, the anti-fog properties and transparency of the coating film are excellent.

Examples of the surface state of the amorphous silica (B) include silanol types, anionic types, and cationic types. A silanol type has silanol groups at the surface. An anionic type has arbitrary anionic groups at the surface. A cationic type has arbitrary cationic groups at the surface. The surface state of the amorphous silica (B) may be any of the above types, but in terms of realizing particularly favorable anti-fog properties, an anionic type is preferred.

### <Liquid Medium>

The liquid medium is used for dissolving or dispersing the resin component (A), and dispersing the amorphous silica (B).

Examples of the liquid medium include water and organic solvents. Examples of the organic solvents include alcohol-based solvents such as methanol, ethanol, n-propanol, 2-propanol, n-butanol, 2-butanol, and isobutanol; glycol-based solvents such as dibutylene glycol, propylene glycol monomethyl ether, and propylene glycol monomethyl ether acetate; cellosolve-based solvents such as butyl cellosolve; ester-based solvents such as ethyl acetate and butyl acetate; ketone-based solvents such as methyl ethyl ketone, methyl isobutyl ketone, and cyclohexanone; and diacetone alcohol. One of these organic solvents may be used alone, or a combination of two or more such organic solvents may be used.

Among the above possibilities, the liquid medium is preferably water, an alcohol-based solvent, or a glycol-based solvent. Water and alcohol-based solvents can readily dissolve the resin component (A). Glycol-based solvents enhance the film formation properties of the coating film.

### <Other Components>

Examples of other components include various types of conventional additives. Examples include surface conditioners, coupling agents, acid catalysts, ultraviolet absorbers, and surfactants.

Specific examples of the surface conditioners include polyether-modified polydimethylsiloxanes, polyether-modified polymethylalkylsiloxanes, and polyether-modified polysiloxanes.

Specific examples of the coupling agents include aluminum-based coupling agents, titanate-based coupling agents, and silane coupling agents.

Specific examples of the acid catalysts include para-toluenesulfonic acid, dinonylnaphthalene monosulfonic acid, dinonylnaphthalene disulfonic acid, and alkylphosphoric acids.

In the anti-fog coating, the proportion of the amorphous silica (B) relative to the total mass of the resin component (A) and the amorphous silica (B) is within a range from 74 to 87% by mass, and preferably from 75 to 85% by mass. Provided the proportion of the amorphous silica (B) is at least as large as the above lower limit, the anti-fog properties and resistance to water run marks for the coating film are excellent, and provided the proportion is not more than the above upper limit, cracking of the coating film is unlikely.

The combined amount of the resin component (A) and the amorphous silica (B), relative to 100% by mass of the non-volatile fraction of the anti-fog coating, is preferably at least 90% by mass, more preferably at least 95% by mass, and may be 100% by mass.

The non-volatile fraction of the anti-fog coating represents the total of all the components besides the liquid medium (namely, the resin component (A), the amorphous silica (B), and any other components).

The non-volatile fraction concentration of the anti-fog coating may be set appropriately with due consideration of the coating method used for the anti-fog coating, and for example, is typically within a range from 3 to 20% by mass relative to the total mass of the anti-fog coating.

The anti-fog coating can be prepared, for example, by mixing a solution or dispersion of the resin component (A) and a dispersion of the amorphous silica (B). At this time, other components and/or additional liquid medium may also be included in the mixing process if necessary.

The dispersion of the amorphous silica (B) is preferably a colloidal silica.

A commercially available product may be used as the dispersion of the amorphous silica (B). Examples of such commercially available products include the Quartron PL series manufactured by Fuso Chemical Co., Ltd., and the SNOWTEX series manufactured by Nissan Chemical Industries, Ltd.

The anti-fog coating can be used for imparting anti-fog properties to an arbitrary substrate. By applying the anti-fog coating to the surface of the substrate and forming a coating film (anti-fog coating film), anti-fog properties can be imparted.

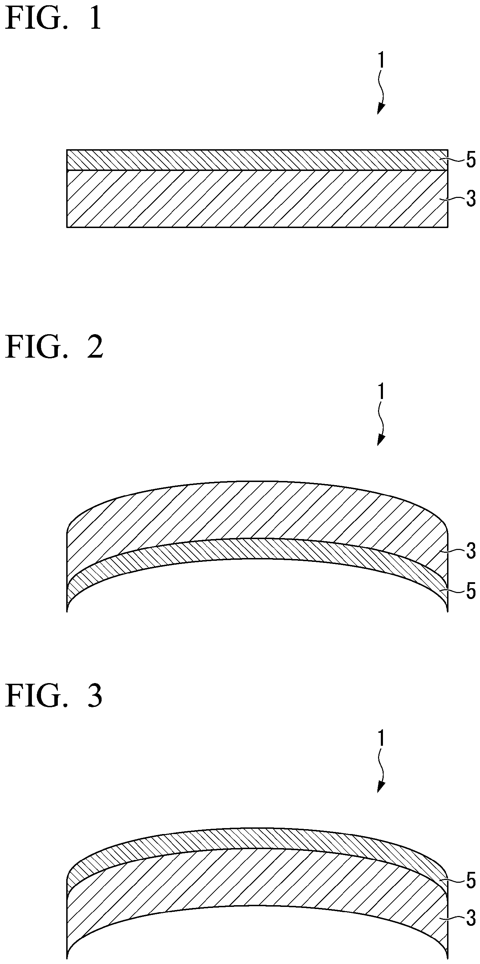

FIG. 1 illustrates one example of a coated substrate having a coating film of the anti-fog coating formed on the substrate surface. The coated substrate 1 of this example includes a substrate 3, and a coating film 5 of the anti-fog coating formed on the surface of the substrate 3. In this example, the substrate 3 is flat, and the coating film 5 is formed on one surface of the substrate.

FIG. 2 illustrates another example of a coated substrate having a coating film of the anti-fog coating formed on the substrate surface. With the exception of the different shape of the substrate 3, the coated substrate 1 of this example is the same as the coated substrate 1 illustrated in FIG. 1. In this example, the substrate 3 has one surface that is a concave surface, while the other surface is a convex surface. The coating film 5 is formed across the concave surface of the substrate 3, with the surface of the coating film 5 also adopting a concave shape.

FIG. 3 illustrates yet another example of a coated substrate having a coating film of the anti-fog coating formed on the substrate surface. With the exception of the different shape of the substrate 3, the coated substrate 1 of this example is also the same as the coated substrate 1 illustrated in FIG. 1. In this example, the substrate 3 has one surface that is a convex surface, while the other surface is a concave surface. The coating film 5 is formed across the convex surface of the substrate 3, with the surface of the coating film 5 also adopting a convex shape.

FIGS. 1 to 3 illustrate examples in which the coating film 5 has been formed on one surface of the substrate 3, but coating films 5 may also be formed on both this one surface and the other surface of the substrate 3.

The shape of the substrate 3 is not limited to the shapes shown in the examples, and other shapes may also be used.

There are no particular limitations on the material of the substrate, and examples include resins such as polycarbonate and polymethyl methacrylate, and glass and the like. In terms of having high hydrophobicity, and therefore being prone to fogging caused by condensation, meaning imparting anti-fog properties is particularly effective, a transparent resin such as a polycarbonate or polymethyl methacrylate is ideal.

Examples of the coating method used for the anti-fog coating include conventional coating methods such as dipping methods, spray methods, roller methods, and flow coating methods.

Following coating, if necessary, the applied anti-fog coating may be cured by heating. There are no particular limitations on the conditions for the heat curing, and examples include a temperature of 60 to 150°C for a period of 5 to 60 minutes.

There are also no particular limitations on the thickness of the formed coating film (the thickness following curing), and for example, the thickness may be within a range from 0.5 to 8 µm.

### [Examples]

The present invention is described below in further detail using a series of examples, but the present invention is not limited to these examples. In the following description, "parts" refers to "parts by mass".

The various abbreviations used in the following description represent the compounds listed below.
DMAA: dimethylacrylamide
iPAA: isopropylacrylamide
MMA: methyl methacrylate
St: styrene
ABN-E: 2,2'-azobis(2-methylbutyronitrile), manufactured by Japan FineChem Company, Inc.
RAFT-1: a compound represented by formula (1) disclosed in Japanese Unexamined Patent Application, First Publication No. 2019-26669
IPA: 2-propanol
PL-ID: Quartron PL-1-D manufactured by Fuso Chemical Co., Ltd., a colloidal silica containing an amorphous silica dispersed in a dispersion medium (water), amorphous silica concentration: 20% by mass, surface state: anionic type, primary particle size: 15 nm
ST-OS: SNOWTEX OS manufactured by Nissan Chemical Industries, Ltd., a colloidal silica containing an amorphous silica dispersed in a dispersion medium (water), amorphous silica concentration: 20% by mass, surface state: anionic type, primary particle size: 9 nm
ST-YL: SNOWTEX YL manufactured by Nissan Chemical Industries, Ltd., a colloidal silica containing an amorphous silica dispersed in a dispersion medium (water), amorphous silica concentration: 40% by mass, surface state: anionic type, primary particle size: 60 nm
ST-ZL: SNOWTEX ZL manufactured by Nissan Chemical Industries, Ltd., a colloidal silica containing an amorphous silica dispersed in a dispersion medium (water), amorphous silica concentration: 40% by mass, surface state: anionic type, primary particle size: 80 nm

### <Production Example A-1>

A two-neck flask was charged with 70 parts of iPAA, 30 parts of MMA, 0.3 parts of RAFT-1, 0.18 parts of ABN-E, 100 parts of ethyl acetate and 30 parts of methanol, the temperature was raised to 70°C while the inside of the flask was flushed with nitrogen gas, and a polymerization reaction was conducted for 10 hours under constant stirring, thus obtaining a solution of a resin A-1 (non-volatile fraction: approximately 40% by mass).

### <Production Examples A-2 to A-7>

With the exception of altering the materials added to the flask in accordance with the formulations shown in Table 1, solutions of resins A-2 to A-7 (non-volatile fraction: approximately 40% by mass in each case) were obtained in the same manner as Production Example A-1.

The polymerization rate (%) in each production example (non-volatile fraction of obtained resin solution / theoretical non-volatile fraction of resin solution × 100) was calculated as non-volatile fraction (%) of obtained resin solution / theoretical non-volatile fraction (%) of resin solution × 100. The results are shown in Table 1.

Here, the "non-volatile fraction of the obtained resin solution" (measured value) was determined by sampling approximately 1 g of the resin solution, heating the sample at 135°C for 60 minutes, and then calculating the ratio of the mass following heating relative to the mass prior to heating. The "theoretical non-volatile fraction of the resin solution" was calculated as (total amount of monomer (parts) + amount of RAFT agent (parts) + amount of polymerization initiator (parts)) / total amount of all components (parts) × 100.

For each of the resins (A-1 to A-7) contained in the resin solutions obtained in the various production examples, gel permeation chromatography (GPC) was used to determine the polystyrene-equivalent number average molecular weight (Mn), weight average molecular weight (Mw) and polydispersity (Mw/Mn). The GPC measurement conditions were as follows. The values for Mw and Mw/Mn are shown in Table 1.
GPC apparatus: GPC-01 (manufactured by Shoko Co., Ltd.)
Columns: two Shodex A-806M connected in series (manufactured by Showa Denko K.K.)
Detector: Shodex RI-71 (manufactured by Showa Denko K.K.)
Mobile phase: tetrahydrofuran
Flow rate: 1 mL/minute

**[Table 1]**

| | | | Production Example | | | | | | |
|---|---|---|---|---|---|---|---|---|---|
| | | | A-1 | A-2 | A-3 | A-4 | A-5 | A-6 | A-7 |
| Monomer mixture | Monomer (a) [parts] | DMAA | - | 45 | 40 | - | - | 60 | - |
| | | iPAA | 70 | - | - | 20 | 40 | - | 90 |
| | Monomer (b) [parts] | MMA | 30 | 45 | 50 | 50 | 30 | 30 | 10 |
| | | 5t | - | 10 | 10 | 30 | 30 | 10 | - |
| RAFT agent [parts] | | RAFT-1 | 0.3 | 0.3 | 0.3 | 0.5 | 0.2 | 0.3 | 0.3 |
| Polymerization initiator [parts] | | ABN-E | 0.18 | 0.18 | 0.18 | 0.18 | 0.09 | 0.18 | 0.18 |
| Polymerization solvent [parts] | | Ethyl acetate | 100 | 100 | 100 | 100 | 100 | 100 | 100 |
| | | Methanol | 30 | 30 | 30 | 30 | 30 | 30 | 30 |
| Characteristics | Mw | | 46,000 | 58,000 | 52,000 | 37,000 | 112,000 | 84,000 | 86,000 |
| | Mw/Mn | | 2.2 | 2.3 | 2.3 | 2.6 | 2.8 | 2.5 | 2.4 |

### <Example 1>

A container was charged with an amount of PL-ID equivalent to 8.2 parts of amorphous silica, an amount of the solution of the resin A-2 equivalent to a non-volatile fraction of 1.5 parts and 90.3 parts of a liquid medium, and a Chemistirrer (manufactured by Tokyo Rika Kikai Co., Ltd.) was used to stir the mixture to obtain an anti-fog coating.

### <Examples 2 to 12, Comparative Examples 1 to 6>

With the exception of altering the materials added to the container in accordance with the formulations shown in Tables 2 and 3, anti-fog coatings were obtained in the same manner as Example 1.

In the cells in Tables 2 and 3 relating to the liquid medium, the composition shown represents the combined total of the dispersion medium for the colloidal silica (such as PL-ID), the solvent medium for the resin solution, and the liquid medium added when preparing the anti-fog coating.

### <Evaluations>

For each of the anti-fog coatings obtained in the above examples, test pieces were produced, and the coating workability, the initial external appearance, the anti-fog properties, and the resistance to water run marks were evaluated using the procedures described below. The results are shown in Tables 2 and 3.

### (Production of Test Pieces)

The anti-fog coating was applied to the surface of a polycarbonate sheet using a spray method in sufficient amount to produce a thickness following drying of 3 µm, and the coating was then heated and dried at 120°C for 15 minutes to form a coating film. The thus obtained coated polycarbonate sheet was used as a test piece.

### (Coating Workability)

The produced test piece was inspected visually for the presence or absence of swelling (sagging) at the bottom edge of the coating film, and the coating workability was evaluated against the following criteria.
G: no sagging
P: sagging

### (Initial External Appearance)

The produced test piece was inspected visually for transparency of the coating film and the occurrence of cracking, and the initial external appearance was evaluated against the following criteria.
G: the coating film was transparent, and no cracks were visible
Pc: cracking visible at the edges of the coating film
Pt: the degree of transparency of the coating film was slightly low
VPc: cracking visible across the entire surface of the coating film
VPt: the coating film was opaque

### (Anti-Fog Properties)

The produced test piece was stood up so that water droplets would run down the coating film surface, 40°C steam was then projected at the coating film for three minutes, the external appearance of the coating film was inspected visually, and the anti-fog properties were evaluated against the following criteria.
G: the coating film did not fog during the steam application
P: the coating film fogged during the steam application, but the fog disappeared within 5 seconds of stopping the steam application
VP: the coating film fogged during the steam application, and the fog did not disappear even after 5 seconds elapsed following stopping of the steam application

### (Resistance to Water Run Marks)

The test piece obtained following application of the steam in the evaluation of the anti-fog properties was left to stand for 12 hours in an environment having a temperature of 25±2°C and a humidity of 55±5% RH to dry the coating film. The external appearance of the dried coating film was inspected visually, and the resistance to water run marks was evaluated against the following criteria.
G: no water run marks on the coating film
VP: water run marks visible on the coating film

### (Humidity Resistance)

The test piece was left to stand for 10 days in an environment at 65°C and 95% RH. Subsequently, the external appearance of the coating film was inspected visually, and the humidity resistance was evaluated against the following criteria.
G: no change in the external appearance of the coating film
P: slight change such as whitening visible on the coating film
VP: the coating film whitened or dissolved

**[Table 2]**

| | | Particle size | Examples | | | | | | | | |
|---|---|---|---|---|---|---|---|---|---|---|---|
| | | | 1 | 2 | 3 | 4 | 5 | 6 | 7 | 8 | 9 |
| Amorphous silica [parts] | PL-lD | 15 nm | 8.2 | 8.2 | 8.2 | | 6.8 | 6.8 | 6.6 | | 6.8 |
| | ST-OS | 9 nm | | | | 7.7 | | | | | |
| | ST-YL | 60 nm | | | | | | | | 7.7 | |
| | ST-ZL | 80 nm | | | | | | | | | |
| Resin component [parts] | Resin A-1 | | | 1.7 | | | | | | 1.9 | |
| | Resin A-2 | | 1.5 | | 1.7 | 1.9 | 2 | | 2.2 | | |
| | Resin A-3 | | | | | | | 2 | | | |
| | Resin A-4 | | | | | | | | | | |
| | Resin A-5 | | | | | | | | | | 2 |
| | Resin A-6 | | | | | | | | | | |
| | Resin A-7 | | | | | | | | | | |
| Liquid medium [parts] | Water | | 56 | 56 | 56 | 56 | 56 | 56 | 56 | 56 | 56 |
| | IPA | | 24.45 | 23.95 | 23.95 | 23.95 | 24.6 | 24.6 | 24.3 | 23.95 | 24.6 |
| | Methanol | | 0.75 | 0.85 | 0.85 | 0.95 | 1 | 1 | 1.1 | 0.95 | 1 |
| | Ethyl acetate | | 1.5 | 1.7 | 1.7 | 1.9 | 2 | 2 | 2.2 | 1.9 | 2 |
| | Dibutyl glycol | | 7.6 | 7.6 | 7.6 | 7.6 | 7.6 | 7.6 | 7.6 | 7.6 | 7.6 |
| Total [parts] | | | 100 | 100 | 100 | 100 | 100 | 100 | 100 | 100 | 100 |
| Proportion of amorphous silica relative to total mass of resin component and amorphous silica [%] | | | 84.5 | 82.8 | 82.8 | 80.2 | 77.3 | 77.3 | 75.0 | 80.2 | 77.3 |
| Evaluations | Coating workability | | G | G | G | G | G | G | G | G | P |
| | Initial external appearance | | Pc | G | G | G | G | G | G | Pt | G |
| | Anti-fog properties | | G | G | G | G | G | P | P | G | G |
| | Resistance to water run marks | | G | P | G | G | G | G | P | G | G |
| | Humidity resistance | | G | G | G | G | G | G | G | G | G |

**[Table 3]**

| | | Particle size | Examples | | | Comparative Examples | | | | | |
|---|---|---|---|---|---|---|---|---|---|---|---|
| | | | 10 | 11 | 12 | 1 | 2 | 3 | 4 | 5 | 6 |
| Amorphous silica [parts] | PL-lD | 15 nm | 6.8 | | | 9 | | 8.2 | | 8.2 | |
| | ST-OS | 9 nm | | 8.2 | | | | | | | |
| | ST-YL | 60 nm | | | 8.2 | | | | 6.5 | | |
| | ST-ZL | 80 nm | | | | | 7.7 | | | | 8.2 |
| Resin component [parts] | Resin A-1 | | | | | | | | | | |
| | Resin A-2 | | | 1.5 | 1.5 | 1.2 | | | 2.4 | | 1.5 |
| | Resin A-3 | | | | | | 1.9 | | | | |
| | Resin A-4 | | | | | | | 1.7 | | | |
| | Resin A-5 | | | | | | | | | | |
| | Resin A-6 | | 1.7 | | | | | | | | |
| | Resin A-7 | | | | | | | | | 1.7 | |
| Liquid medium [parts] | Water | | 56 | 56 | 56 | 56 | 56 | 56 | 56 | 56 | 56 |
| | IPA | | 24.9 | 24.45 | 24.45 | 24.4 | 23.95 | 23.95 | 23.9 | 23.95 | 24.45 |
| | Methanol | | 1 | 0.75 | 0.75 | 0.6 | 0.95 | 0.85 | 1.2 | 0.85 | 0.75 |
| | Ethyl acetate | | 2 | 1.5 | 1.5 | 1.2 | 1.9 | 1.7 | 2.4 | 1.7 | 1.5 |
| | Dibutyl glycol | | 7.6 | 7.6 | 7.6 | 7.6 | 7.6 | 7.6 | 7.6 | 7.6 | 7.6 |
| Total [parts] | | | 100 | 100 | 100 | 100 | 100 | 100 | 100 | 100 | 100 |
| Proportion of amorphous silica relative to total mass of resin component and amorphous silica [%] | | | 80.0 | 84.5 | 84.5 | 88.2 | 80.2 | 82.8 | 73.0 | 82.8 | 84.5 |
| Evaluations | Coating workability | | G | G | G | G | G | G | G | G | G |
| | Initial external appearance | | G | Pc | Pt | VPc | VPt | G | G | G | VPt |
| | Anti-fog properties | | G | G | G | G | G | VP | VP | G | P |
| | Resistance to water run marks | | G | G | G | G | G | G | VP | VP | G |
| | Humidity resistance | | G | G | G | G | G | G | G | VP | G |

By using the anti-fog coatings of Examples 1 to 12, coating films having favorable external appearance, anti-fog properties, resistance to water run marks and humidity resistance were able to be formed. The anti-fog coatings of Examples 1 to 8 and Examples 10 to 12, in which the Mw/Mn value for the resin component was 2.5 or less, also exhibited excellent coating workability.

In contrast, the coating film of the anti-fog coating of Comparative Example 1, in which the proportion of amorphous silica relative to the total mass of the resin component and the amorphous silica exceeded 87% by mass, exhibited cracking across the entire surface, and had poor external appearance.

The coating films of the anti-fog coatings of Comparative Examples 2 and 6, in which the primary particle size of the amorphous silica exceeded 60 nm, were opaque and had poor external appearance.

The coating film of the anti-fog coating of Comparative Example 3, in which the proportion of the monomer (a) unit relative to the total of all the structural units that constituted the resin component was less than 30% by mass, exhibited inferior anti-fog properties.

The coating film of the anti-fog coating of Comparative Example 4, in which the proportion of amorphous silica relative to the total mass of the resin component and the amorphous silica was less than 74% by mass, exhibited poor anti-fog properties and inferior resistance to water run marks.

The coating film of the anti-fog coating of Comparative Example 5, in which the proportion of the monomer (a) unit relative to the total of all the structural units that constituted the resin component exceeded 75% by mass, exhibited inferior resistance to water run marks and poor humidity resistance.

### [Industrial Applicability]

By applying the anti-fog coating of the present invention to a substrate, a coating film having excellent anti-fog properties, humidity resistance, resistance to water run marks, and external appearance can be formed.

The substrate on which a coating film of the anti-fog coating of the present invention is formed may be used, for example, in a vehicle light such as an automobile head lamp, a meter cover for a motorbike of the like, of a visor cover for a helmet or the like.

### [Reference Signs List]

- 1:: Coated substrate
- 3:: Substrate
- 5:: Coating film of anti-fog coating

## Claims

1. An anti-fog coating comprising a resin component (A) having a structural unit based on a (meth)acrylamide-based monomer represented by a formula (a) shown below and a structural unit based on at least one hydrophobic monomer selected from the group consisting of (meth)acrylate-based monomers having a hydrocarbon group and styrene-based monomers, and an amorphous silica (B) having an average primary particle size of not more than 60 nm, wherein
a proportion of structural units based on the (meth)acrylamide-based monomer relative to a total of all structural units that constitute the resin component (A) is within a range from 30 to 75% by mass, and
a proportion of the amorphous silica (B) relative to a total mass of the resin component (A) and the amorphous silica (B) is within a range from 74 to 87% by mass:
CH₂=CH-CO-NR¹R² ... (a)
wherein R¹ and R² either each independently represent a hydrogen atom of an alkyl group, or R¹ and R² are bonded together to form a nitrogen-containing heterocyclic group together with N.

2. The anti-fog coating according to Claim 1, wherein a proportion of structural units based on the hydrophobic monomer relative to a total of all structural units that constitute the resin component (A) is within a range from 25 to 70% by mass.

3. The anti-fog coating according to Claim 1 or 2, wherein a molecular weight dispersity of the resin component (A) is not more than 3.0.
